# EUROPEAN PATENT APPLICATION

(11) **EP 4 481 229 A1**
(43) Date of publication of application: **25.12.2024**
(21) Application number: 23189131.8
(22) Date of filing: 02.08.2023
(51) Int. Cl.: F16F 9/46, F16F 9/54

(54) **IMPROVED STRUCTURE OF AN OIL-PRESSURE SHOCK ABSORBER**

(30) Priority: 21.06.2023 TW 112206356 U
(71) Applicant: Bike Pow Co.,Ltd., 24344 New Taipei City (TW)
(72) Inventor: HUANG, CHIH-HANG, 24344 New Taipei (TW)
(74) Representative: Zaboliene, Reda

(57) **Abstract**

The present invention relates to an improved structure of an oil-pressure shock absorber, mainly including a shock absorber body, a lower sleeve seat, an adjusting structure, and a mandrel. The lower sleeve seat is arranged below the shock absorber body. The mandrel is arranged at the axis of the shock absorber body. The upper end of the mandrel and the damping adjusting structure the shock absorber body adjust a structure. The lower end of the mandrel extends into the lower sleeve seat. The adjusting structure is arranged in a positioning hole. The two sides of the lower sleeve seat are opened and provided with the positioning hole. The lower sleeve seat at least includes an adjusting button and an adjusting rod which pass through, are arranged in the positioning holes and are in butt joint with each other. The adjusting rod is provided with a pushing part with an inclined surface. The inclined surface abuts against an oblique angle provided in the periphery of the bottom end of the mandrel. A knob or a multi-angle inner hole provided in the adjusting button drives the adjusting button to push against the adjusting rod, so that the inclined surface of the pushing part and the oblique angle of the mandrel act to drive the mandrel to move up and down. Therefore, the damping adjusting structure is linked to the mandrel to change a damping size.

## Description

### FIELD OF THE INVENTION

The present invention belongs to the field of vehicle parts, and particularly relates to an improved structure of a shock absorber.

### DESCRIPTION OF THE PRIOR ART

There are more people but less land in Taiwan. At the early stage, a transport system was not perfect. Therefore, most people were used to taking a motor vehicle (or a motorcycle) as a transport tool. According to statistics, there were more than 14 million motor vehicles in Taiwan in August 2022. Therefore, the market of the motor vehicle-related industry as well as parts and components thrive in Taiwan.

A tire of a motor vehicle is in contact with the ground in a riding process. According to the difference in the flatness of the ground, a motor vehicle body presses downwards due to its weight and generates an upward counterforce. The motor vehicle vibrates up and down under the action of a driving speed in a driving process, so that a driver is very uncomfortable when riding. Meanwhile, driving safety can be influenced. Therefore, a shock absorber is arranged on the motor vehicle to absorb vibration generated when the motor vehicle is driven.

However, as for Republic of China Invention Patent No.M576121 entitled "AIR-PRESSURE SHOCK-ABSORBING STRUCTURE FOR HEAVY MOTOR VEHICLE" and Republic of China Invention Patent No.M269246 entitled "IMPROVED STRUCTURE OF REAR SHOCK ABSORBER OF BICYCLE", an extending-side adjusting button at an extending side of a shock absorber is arranged above whether an oil-pressure shock absorber structure or an air-pressure shock absorber structure. Therefore, when a driver adjusts the shock absorber, since the extending-side adjusting button is covered by a cover of a motor vehicle body, the shock absorber can be adjusted only when a motor vehicle shell is disassembled. Therefore, a structure is designed unreasonably.

### SUMMARY OF THE INVENTION

To overcome the problems described in the prior art, an objective of the present invention is to provide an improved structure of an oil-pressure shock absorber in which an extending-side adjusting button is arranged at the lower end so as to prevent the extending-side adjusting button from being covered, which makes it difficult to adjust the shock absorber.

To achieve the aforementioned objective, the improved structure of the oil-pressure shock absorber provided by the present invention mainly includes a shock absorber body, a lower sleeve seat, an adjusting structure, and a mandrel. The shock absorber body is provided with a damping adjusting structure. The lower sleeve seat is arranged below the shock absorber body. Positioning holes are provided at the side edges of the two opposite sides of the lower sleeve seat. The axis of the positioning hole passes through the axis of the lower sleeve seat. The adjusting structure includes an extending-side adjusting button and an adjusting rod. The extending-side adjusting button and the adjusting rod are sleeved in the positioning holes respectively. A pushing part with an inclined surface is arranged in the middle of the adjusting rod. A connecting member is arranged on the end surface of the extending-side adjusting button facing the interior of the lower sleeve seat. A butt-joint structure is arranged on the end surface of the adjusting rod facing the interior of the lower sleeve seat. The connecting member is connected to the butt-joint structure. The mandrel is arranged at the axis of the shock absorber body. The upper end of the mandrel is connected to the damping adjusting structure. An oblique angle is arranged at the periphery of the end surface of the mandrel opposite to the other end of a connection part of the mandrel and the damping adjusting structure. The oblique angle of the mandrel abuts against the inclined surface of the pushing part.

The adjusting structure further includes two sleeves. The sleeve is sleeved in the positioning hole. The extending-side adjusting button and the adjusting rod are arranged in a sleeve hole provided in the axis of the sleeve, respectively.

The connecting member and the butt-joint structure are correspondingly a groove and a bump.

A knob or a multi-angle inner hole is provided on an end surface of the extending-side adjusting button facing the outer side of the lower sleeve seat.

### BRIEF DESCRIPTION OF THE DRAWINGS

FIG. 1 is a perspective view of an improved structure of an oil-pressure shock absorber of the present invention;
FIG. 2 is a general exploded view of an improved structure of an oil-pressure shock absorber of the present invention;
FIG. 3 is an exploded view of a structure of an improved structure of an oil-pressure shock absorber of the present invention;
FIG. 4 is a side cross-sectional view of an improved structure of an oil-pressure shock absorber of the present invention.

### DETAILED DESCRIPTION OF THE INVENTION

In order to facilitate understanding of the examination committee for the technical features, contents and advantages of the present invention and the effects achieved thereby, the present invention will be described in details with reference to the accompanying drawings and attachments by means of the embodiments. The drawings used therein are only intended to illustrate and assist the specification, and may not be the true scale and precise configuration of the present invention after implementation. Therefore, the scale and configuration relationship of the accompanying drawings should not be interpreted to limit the scope of the claims.

In the description of this implementation, it is to be understood that the orientations or positional relationship of the terms "top", "bottom", "left", "right", "top", "bottom", "inside", "outside", etc. indicate orientations or positional relationships that are based on the accompanying drawings, are intended only to illustrate and simplify the description of the disclosure, and not to indicate or imply that a device or an element referred to have a particular orientation and be constructed and operated in a particular orientation, and therefore shall not be construed as limiting the present invention.

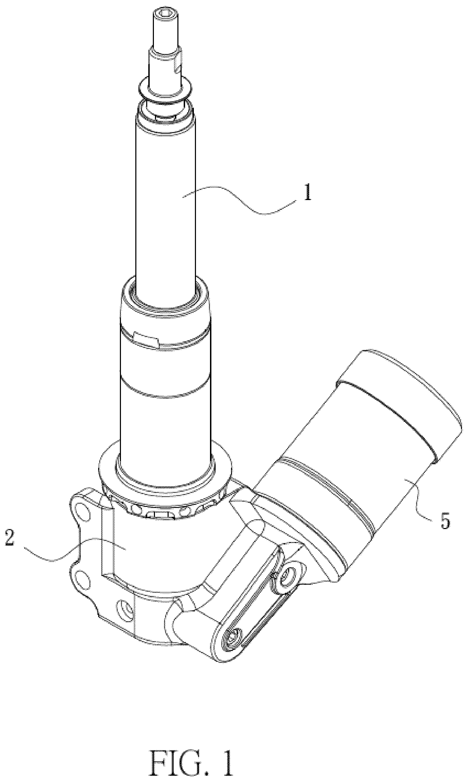

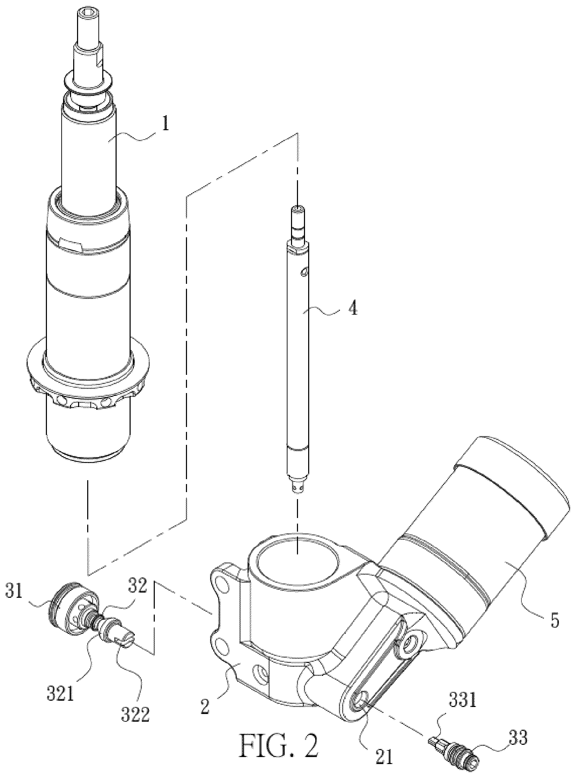

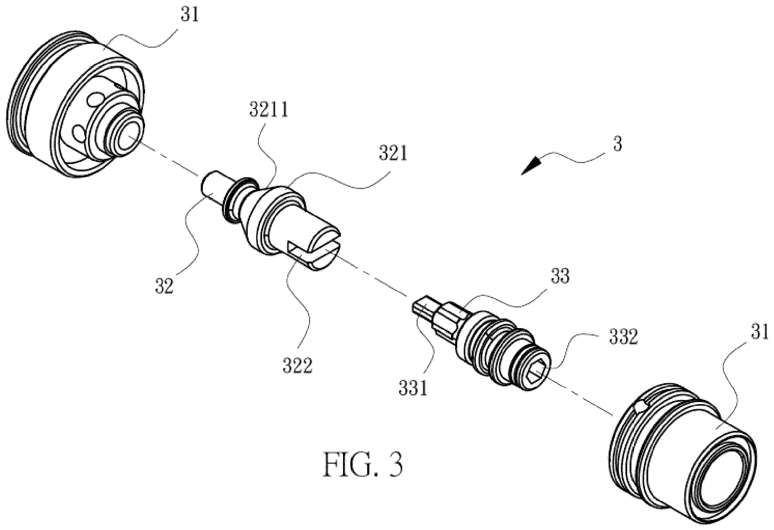

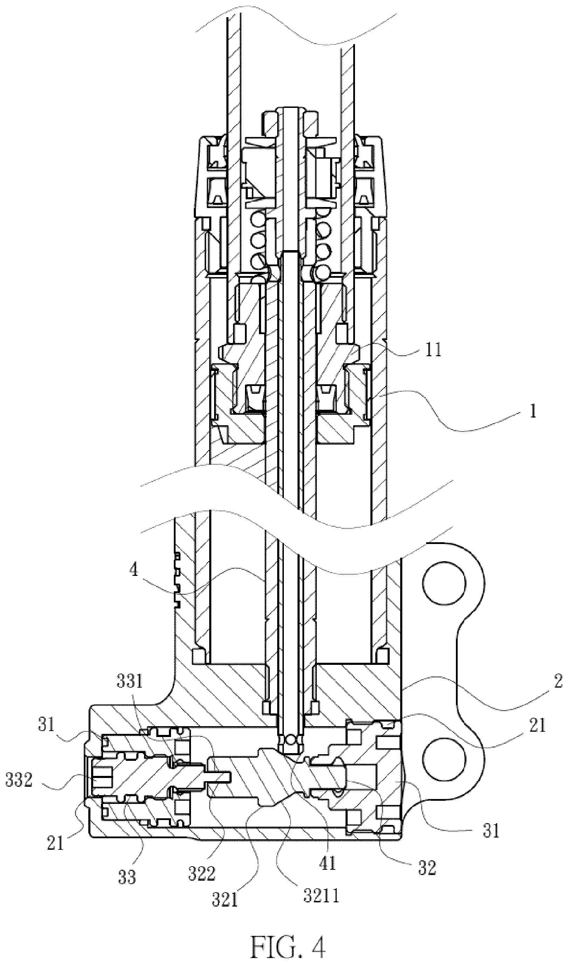

Please refer to FIGS 1-4, an improved structure of an oil-pressure shock absorber provided by the present invention mainly includes a shock absorber body 1, a lower sleeve seat 2, an adjusting structure 3, and a mandrel 4. A damping adjusting structure 11 is arranged in the shock absorber body 1. The lower sleeve seat 2 can be connected to an oil-pressure gas cylinder 5. The side edges of the two opposite sides of the lower sleeve seat 2 are opened and provided with coaxial positioning holes 21. The axis of the positioning hole 21 passes through the axis of the shock absorber body 1.

The adjusting structure 3 includes two sleeves 31, an adjusting rod 32, and an extending-side adjusting button 33. The axis of the sleeve 31 is opened and provided with a sleeve hole 311. The middle of the adjusting rod 32 is provided with a pushing part 321 with an inclined surface 3211. One end of the adjusting rod 32 is provided with a butt-joint structure 322. The butt-joint structure 322 is a groove. The two end surfaces of the adjusting button 33 are provided with a connecting member 331 and a multi-angle inner hole 332, respectively. The connecting member 331 is a bump. The mandrel 4 has an axis provided at the shock absorber body 1. One end of the mandrel 4 is connected to the damping adjusting structure 11. An oblique angle 41 is arranged at the periphery of the end surface of the mandrel 4 opposite to the other end of a connection part of the mandrel and the damping adjusting structure 11.

When the improved structure of the oil-pressure shock absorber provided by the present invention is assembled and used, the extending-side adjusting button 33 and the adjusting rod 32 pass through and are arranged in the sleeve holes 311 of the two sleeves 31, respectively. The two sleeves 31 pass through and are arranged in positioning holes 21 of the lower sleeve seat 2, respectively. The butt-joint structure 322 of the adjusting rod 32 and the connecting member 331 of the extending-side adjusting bottom 33 are oriented towards the inside of the lower sleeve 2. The butt-joint structure 32 is in butt joint with the connecting member 331. In addition, the pushing part 321 of the adjusting rod 32 is located at the axis of the lower sleeve seat 2. Then, the lower sleeve seat 2 is connected to the lower portion of the shock absorber body 1. The lower end of the mandrel 4 arranged at the axis of the shock absorber body 1 penetrates into the lower sleeve seat 2. In addition, the oblique angle 41 of the end face of the mandrel 2 opposite to the other end of the damping adjusting structure 11 abuts against the inclined surface 3211 of the pushing part 321. Therefore, when the improved structure of the oil-pressure shock absorber provided by the present invention is mounted and arranged on a motor vehicle, the adjusting structure 3 is located at the lower end of the shock absorber. Therefore, when the improved structure of the oil-pressure shock absorber needs to adjust a damping size, the extending-side adjusting button 33 is rotated by the action between a multi-angle spanner (not shown in the figure) and the multi-angle inner hole 332. The extending-side adjusting button 33 and the adjusting rod 32 are driven through the linkage of the connecting member 331 and the butt joint structure 322 to move along the axial direction of the positioning hole 21. In addition, the inclined surface 3211 of the pushing part 321 acts with the oblique angle 41 of the mandrel 4 to drive the mandrel 4 to move up and down. Therefore, the mandrel 4 is linked to the damping adjusting structure 11 to change the damping size.

Therefore, the extending-side adjusting button 33 is arranged below the shock absorber body 1, so that the improved structure of the oil-pressure shock absorber provided by the present invention can effectively avoid the extending-side adjusting button 33 from being covered by a shell of the motor vehicle. Therefore, the present invention can solve the problem in the prior art that damping is adjusted only when the shell of the motor vehicle needs to be disassembled.

The above-mentioned contents indicate only some of the embodiments of the present invention but are not intended to limit the scope of the present invention, a person skilled in the art shall know that several variants and improvements may be made, which all are all within the scope of protection of the present invention.

### DESCRIPTION OF REFERENCE NUMERALS

1: shock absorber body
11: damping adjusting structure
2: lower sleeve seat
21: positioning hole
3: adjusting structure
31: sleeve
32: adjusting rod
321: pushing part
3211: inclined surface
322: butt joint structure
33: adjusting button
331: connecting member
332: multi-angle inner hole
4: mandrel
41: oblique angle
5: oil-pressure gas cylinder

## Claims

1. An improved structure of an oil-pressure shock absorber, mainly comprising:
a shock absorber body, which is provided with a damping adjusting structure;
a lower sleeve seat, which is arranged below the shock absorber body, side edges of two opposite sides of the lower sleeve seat being opened and provided with positioning holes, and an axis of the positioning hole passes through an axis of the lower sleeve seat;
an adjusting structure, which comprises an extending-side adjusting button and an adjusting rod, the extending-side adjusting button and the adjusting rod being sleeved in the positioning holes, respectively, to move along an axial direction of the positioning hole, a pushing part with an inclined surface being arranged in a middle of the adjusting rod, a connecting member being arranged at an end surface of the extending-side adjusting button facing an interior of the lower sleeve seat, a butt joint structure being arranged on an end surface of the adjusting rod facing the interior of the lower sleeve seat, and the connecting member being connected to the butt joint structure;
a mandrel, which is arranged on an axis of the shock absorber body, an upper end of the mandrel being connected to the damping adjusting structure, an oblique angle 41 being arranged at a periphery of an end surface of the mandrel opposite to the other end of a connection part of the mandrel and the damping adjusting structure, and the oblique angle of the mandrel abutting against the inclined surface of the pushing part.

2. The improved structure of the oil-pressure shock absorber according to claim 1, wherein the adjusting structure further comprises two sleeves, the sleeve is sleeved in the positioning holes, and the extending-side adjusting button and the adjusting rod are arranged in sleeve holes provided in an axis of the sleeve, respectively, and move along an axial direction of the positioning hole in the sleeve hole.

3. The improved structure of the oil-pressure shock absorber according to claim 1, wherein the connecting member and the butt-joint structure are correspondingly a groove and a bump.

4. The improved structure of the oil-pressure shock absorber according to claim 1, wherein a knob or a multi-angle inner hole is provided at an end surface of the extending-side adjusting button facing an outer side of the lower sleeve seat.
